# EUROPEAN PATENT SPECIFICATION

(11) **EP 2 134 772 B1**
(45) Date of publication and mention of the grant of the patent: **05.06.2013**
(21) Application number: 08717547.7
(22) Date of filing: 10.03.2008
(51) Int. Cl.: C08J 3/24, C08L 101/14

(54) **PROCESS FOR PRODUCING RE-MOISTURISED SURFACE-CROSSLINKED SUPERABSORBENTS**
VERFAHREN ZUR HERSTELLUNG VON NACHBEFEUCHTETEN OBERFLÄCHENVERNETZTEN SUPERABSORBERN
PROCÉDÉ DE FABRICATION DE SUPERABSORBANTS RÉTICULÉS EN SURFACE ET RÉHUMIDIFIÉS

(30) Priority: 12.03.2007 US 906385 P
(43) Date of publication of application: 23.12.2009
(73) Proprietor: BASF SE, 67056 Ludwigshafen (DE)
(72) Inventor: HERFERT, Norbert, 63674 Altenstadt (DE); WENDKER, Martin, 21465 Wentorf (DE); BARTHEL, Holger, 68723 Oftersheim (DE); CHIANG, William G-J, Charlotte, Nc 28226 (US)
(86) International application number: PCT/EP2008/052800
(87) International publication number: WO 2008/110524

(56) References cited:
- WO-A-98/49221
- US-A- 4 771 105
- US-A- 6 090 875
- US-A1- 2004 157 734
- US-A1- 2005 070 671
- US-A1- 2005 245 684
- US-A1- 2005 288 182
- US-B1- 6 605 673

## Description

The present invention relates to a process for producing superabsorbents that exhibit superior permeability properties and are attrition-resistant. In particular, the present invention relates to a process for producing superabsorbents wherein the superabsorbent particles are coated with a permeability enhancing agent and are re-moisturised.

Superabsorbents are known. Superabsorbents are materials that are able to take up and retain several times their weight in water, possibly up to several hundred times their weight, even under moderate pressure. Absorbing capacity is usually lower for salt-containing solutions compared to distilled or otherwise de-ionised water. Typically, a superabsorbent has a centrifugal retention capacity ("CRC", method of measurement see hereinbelow) of at least 5 g/g, preferably at least 10 g/g and more preferably at least 15 g/g. Such materials are also commonly known by designations such as "high-swellability polymer", "hydrogel" (often even used for the dry form), "hydrogel-forming polymer", "water-absorbing polymer", "absorbent gel-forming material", "swellable resin", "water-absorbing resin" or the like. The materials in question are crosslinked hydrophilic polymers, in particular polymers formed from (co)polymerized hydrophilic monomers, graft (co)polymers of one or more hydrophilic monomers on a suitable grafting base, crosslinked ethers of cellulose or starch, crosslinked carboxymethylcellulose, partially crosslinked polyalkylene oxide or natural products that are swellable in aqueous fluids, examples being guar derivatives, of which water-absorbing polymers based on partially neutralized acrylic acid are most widely used. Superabsorbents are usually produced, stored, transported and processed in the form of dry powders of polymer particles, "dry" usually meaning less than 5 wt.-% water content. A superabsorbent transforms into a gel on taking up a liquid, specifically into a hydrogel when as usual taking up water. By far the most important field of use of superabsorbents is the absorbing of bodily fluids. Superabsorbents are used for example in diapers for infants, incontinence products for adults or feminine hygiene products. Examples of other fields of use are as water-retaining agents in market gardening, as water stores for protection against fire, for liquid absorption in food packaging or, in general, for absorbing moisture.

Processes for producing superabsorbents are also known. The acrylate-based superabsorbents which dominate the market are produced by radical polymerization of acrylic acid in the presence of a crosslinking agent (the "internal crosslinker"), usually in the presence of water, the acrylic acid being neutralized to some degree in a neutralization step conducted prior to or after polymerization, or optionally partly prior to and partly after polymerization, usually by adding a alkali, most often an aqueous sodium hydroxide solution. This yields a polymer gel which is comminuted (depending on the type of reactor used, comminution may be conducted concurrently with polymerization) and dried. Usually, the dried powder thus produced (the "base polymer") is surface crosslinked (also termed surface "post"crosslinked) by adding further organic or polyvalent metal (i.e. cationic) crosslinkers to generate a surface layer which is crosslinked to a higher degree than the particle bulk. Most often, aluminium sulphate is being used as polyvalent metal crosslinker. Applying polyvalent metal cations to superabsorbent particles is sometimes not regarded as surface crosslinking, but termed "surface complexing" or as another form of surface treatment, although it has the same effect of increasing the number of bonds between individual polymer strands at the particle surface and thus increases gel particle stiffness as organic surface crosslinkers have. Organic and polyvalent metal surface crosslinkers can be cumulatively applied, jointly or in any sequence.

Surface crosslinking leads to a higher crosslinking density close to the surface of each superabsorbent particle. This addresses the problem of "gel blocking", which means that, with earlier types of superabsorbents, a liquid insult will cause swelling of the outermost layer of particles of a bulk of superabsorbent particles into a practically continuous gel layer, which effectively blocks transport of further amounts of liquid (such as a second insult) to unused superabsorbent below the gel layer. While this is a desired effect in some applications of superabsorbents (for example sealing underwater cables), it leads to undesirable effects when occurring in personal hygiene products. Increasing the stiffness of individual gel particles by surface crosslinking leads to open channels between the individual gel particles within the gel layer and thus facilitates liquids transport through the gel layer. Although surface crosslinking decreases the CRC or other parameters describing the total absorption capacity of a superabsorbent sample, it may well increase the amount of liquid that can be absorbed by hygiene product containing a given amount of superabsorbent.

Other means of increasing the permeability (to be precise, the "gel bed permeability", "GBP" or the "saline flow conductivity", "SFC") of a superabsorbent are also known. These include admixing of superabsorbent with fibres such as fluff in a diaper core or admixing other components that increase gel stiffness or otherwise create open channels for liquid transportation in a gel layer. Usually, components increasing the GBP or SFC are referred to as permeability enhancing agents ("PEA").

Further, there are several methods known to solve the dust problem associated with handling superabsorbents. Due to brittleness or for other reasons, superabsorbents often contain very fine particles which give rise to dusting. This in turn leads to all of the problems associated with airborne organic (i.e., in principle combustible) dust. This can be avoided by methods such as coating or plasticizing superabsorbent particles to reduce brittleness or fixing dust to superabsorbent particles by means of binders. Re-moisturising is known to reduce brittleness, and may also help to alleviate a tendency to build up static electricity observed in dry products.

Besides the dusting problem, there is a caking problem. Superabsorbents tend to form lumps and cake particularly if moist such as during storage in humid air. Caking impedes conveying or forced feeding of superabsorbents, for instance feeding superabsorbent to a superabsorbent processing device such as a diaper-forming machine, or even discharging superabsorbent from containers. Several methods for alleviating this caking problem are known, such as adding inert particles or surfactants.

Frederic L. Buchholz und Andrew T. Graham (Hrsg.) in: "Modern Superabsorbent Polymer Technology", J. Wiley & Sons, New York, U.S.A. / Wiley-VCH, Weinheim, Germany, 1997, ISBN 0-471-19411-5, give a comprehensive overview over superabsorbents and processes for producing superabsorbents. In its section on additives for improved handling of solution-polymerised superabsorbents, this volume discloses that for humid environments, additives that reduce the rate of moisture absorption are of interest. One example is the combination of particulate silica with polyols or polyalkylene glycols for (co)polymers of poly(acrylamide). In its section on advanced products comprising surface crosslinking, aluminium acetate is disclosed as surface crosslinker.

WO 01/74913 A1 relates to regenerating the gel bed permeability of surface-crosslinked superabsorbents, in particular surface-crosslinked superabsorbents which have been subject to attrition, by adding a solution of a salt of an at least trivalent cation, typically an aqueous solution of aluminium sulphate. WO 00/53644 A1 discloses superabsorbents which are surface crosslinked with a combination of a polyol and a cation salt, in particular aluminium sulphate, in aqueous solution.

WO 94/22940 A1 teaches de-dusting superabsorbents by application of a de-dusting agent such as lower aliphatic polyols of greater than about 200 average molecular weight of lower polyalkylene glycols of about 400 to about 6000 average molecular weight. Other suitable de-dusting agents are polyether polyols. The de-dusted superabsorbent may be further blended with flowability enhancers such as silica. According to EP 755 964 A2, a wax coating addresses the dusting problem associated with superabsorbents. EP 703 265 A1 discloses coating the superabsorbent particles with non-reactive, film-forming polymers to avoid dusting.

WO 97/037695 A1 discloses superabsorbents treated with quaternary ammonium salts as anti-caking agent and a hydrophilic de-dusting agent or a mixture of hydrophilic and hydrophobic de-dusting agents. WO 97/30109 A1 teaches de-dusting superabsorbents by coating the particles with a hydrophobic de-dusting agent, such as natural or similar silicon oils.

WO 98/48857 A1 discloses superabsorbent particles which are surface crosslinked by polyvalent metal cations such as Al, Fe, Zr, Mg and Zn ions and treated with a liquid binder such as water, mineral oil or polyols, preferably water. The binder is directly added to a mixture of superabsorbent and polyvalent cation salt, and the superabsorbent ready for use directly after the binder contacting step. The process of EP 690 077 A1 employs co-monomers, in particular ether and hydroxi-group-bearing co-monomers, to produce a superabsorbent polymer with reduced brittleness, at significant cost of water-absorbing capacity.

US 2005/0 245 684 A1 discloses surface cross-linked superabsorbents coated with a polymer containing protonable nitrogen atoms, where surface crosslinking is performed using an alcohol-containing solvent of an organic surface cross-linker and a polyvalent metal salt. US 6 605 673 teaches surface crosslinking using a polyol and a metal salt. A nitrogen-containing ketone is used as surface crosslinker according to US 2005/0 288 182 A1 and may be used in the presence of polyvalent metal salts and an alcohol. US 4 771 105 discloses coating of superabsorbents with a solution of polyvalent metal salt and polyol followed by drying. US 2005/0 070 671 A1 relates to coating of superabsorbents with a solution of polyvalent metal salt and diols followed by drying.

WO 01/25290 A1 teaches highly permeable superabsorbents which are surface-crosslinked by organic crosslinkers. Their brittleness is reduced by re-moisturising with water. Japanese Laid-Open Patent Application Publication No. 09/124 879 discloses re-moisturizing superabsorbents that have been surface-crosslinked by organic crosslinkers, using water or an aqueous solution of inorganic salts such as aluminium sulphate. WO 98/49 221 A1 relates to a process for producing a superabsorbent with improved processability by re-moisturising a superabsorbent that has first been contacted with an aqueous inorganic additive solution such as an aluminium sulphate solution which may contain other surface-crosslinking agents, in the absence of an organic solvent or water-insoluble inorganic powders, and then heat-treated. EP 780 424 A1 discloses a process for producing superabsorbents that have been surface-crosslinked using a surface crosslinking agent comprising epoxi groups and heating to a temperature preferably above 100 °C, in which epoxi residues are removed by heating the surface-crosslinked superabsorbent to a temperature of preferably below 65 °C and treating the heated superabsorbent with water, without significantly drying the superabsorbent. The superabsorbent may, in addition to the epoxi surface crosslinker, be surface crosslinked with other surface crosslinkers such as polyvalent metal salts, for example aluminium.

It is an object of the present invention to provide an improved process for producing a superabsorbent which exhibits high gel-bed permeability, does not tend to agglomerate or cake, and does not tend to form dust. It is a further object of this invention to provide such superabsorbent, and another object is to provide liquid-absorbing products comprising such superabsorbent and processes for their production.

We have found that this object is achieved by a process for producing a re-moisturised, surface-crosslinked superabsorbent that comprises the steps of contacting a superabsorbent base polymer with an organic crosslinker and a polyvalent metal salt solution in the presence of an alcohol selected from the group consisting of propylene glycol, 1,3-propandiol, 1-propanol, 2-propanol and mixtures thereof, heat-treating to produce a surface-crosslinked, dry superabsorbent and re-moisturising the surface-crosslinked dry superabsorbent by adding pure water to achieve a moisture content of the re-moisturized superabsorbent of at least 1 wt.% and not more than 7 wt.%, based on the total weight of re-moisturized superabsorbent.

We have further found an improved superabsorbent that is obtainable by using this process, liquid-absorbing products comprising such superabsorbent and processes for their production.

The superabsorbent in the present invention is a superabsorbent capable of absorbing and retaining amounts of water equivalent to many times its own weight under a certain pressure. In general, it has a centrifugal retention capacity (CRC, method of measurement see hereinbelow) of at least 5 g/g, preferably at least 10 g/g and more preferably at least 15 g/g. Preferably, the superabsorbent is a crosslinked polymer based on partially neutralized acrylic acid, and it is surface postcrosslinked. A "superabsorbent" can also be a mixture of chemically different individual superabsorbents in that it is not so much the chemical composition which matters as the superabsorbing properties.

Processes for producing superabsorbents, including surface-postcrosslinked superabsorbents, are known. Synthetic superabsorbents are obtained for example by polymerization of a monomer solution comprising
a) at least one ethylenically unsaturated acid-functional monomer,
b) at least one crosslinker (usually designated the "internal" crosslinker(s)),
c) optionally one or more ethylenically and/or allylically unsaturated monomers copolymerizable with the monomer a), and
d) optionally one or more water-soluble polymers onto which the monomers a), b) and if appropriate c) can be at least partly grafted.

Suitable monomers a) are for example ethylenically unsaturated carboxylic acids, such as acrylic acid, methacrylic acid, maleic acid, fumaric acid and itaconic acid, or derivatives thereof, such as acrylamide, methacrylamide, acrylic esters and methacrylic esters. Acrylic acid and methacrylic acid are particularly preferred monomers. Acrylic acid is most preferable.

The monomers a) and especially acrylic acid comprise preferably up to 0.025% by weight of a hydroquinone half ether. Preferred hydroquinone half ethers are hydroquinone monomethyl ether (MEHQ) and/or tocopherols.

Tocopherol refers to compounds of the following formula: 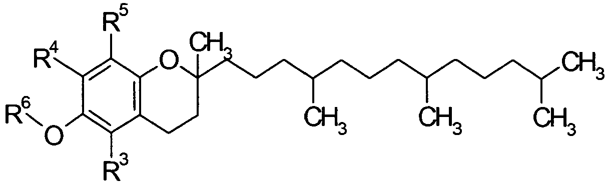 where R³ is hydrogen or methyl, R⁴ is hydrogen or methyl, R⁵ is hydrogen or methyl and R⁴ is hydrogen or an acid radical of 1 to 20 carbon atoms.

Preferred R⁶ radicals are acetyl, ascorbyl, succinyl, nicotinyl and other physiologically tolerable carboxylic acids. The carboxylic acids can be mono-, di- or tricarboxylic acids.

Preference is given to alpha-tocopherol where R³ = R⁴ = R⁵ = methyl, especially racemic alpha-tocopherol. R⁶ is more preferably hydrogen or acetyl. RRR-alpha-Tocopherol is preferred in particular.

The monomer solution comprises preferably not more than 130 weight ppm, more preferably not more than 70 weight ppm, preferably not less than 10 weight ppm, more preferably not less than 30 weight ppm and especially about 50 weight ppm of hydroquinone half ether, all based on acrylic acid, with acrylic acid salts being arithmetically counted as acrylic acid. For example, the monomer solution can be produced using an acrylic acid having an appropriate hydroquinone half ether content.

Crosslinkers b) are compounds having at least two polymerizable groups which can be free-radically interpolymerized into the polymer network. Useful crosslinkers b) include for example ethylene glycol dimethacrylate, diethylene glycol diacrylate, allyl methacrylate, trimethylolpropane triacrylate, triallylamine, tetraallyloxyethane as described in EP 530 438 A1, di- and triacrylates as described in EP 547 847 A1, EP 559 476 A1, EP 632 068 A1, WO 93/21237 A1, WO 03/104299 A1, WO 03/104300 A1, WO 03/104301 A1 and DE 103 31 450 A1, mixed acrylates which, as well as acrylate groups, comprise further ethylenically unsaturated groups, as described in DE 103 31 456 A1 and WO 04/013064 A2, or crosslinker mixtures as described for example in DE 195 43 368 A1, DE 196 46 484 A1, WO 90/15830 A1 and WO 02/032962 A2.

Useful crosslinkers b) include in particular N,N'-methylenebisacrylamide and N,N'-methylenebismethacrylamide, esters of unsaturated mono- or polycarboxylic acids of polyols, such as diacrylate or triacrylate, for example butanediol diacrylate, butanediol dimethacrylate, ethylene glycol diacrylate, ethylene glycol dimethacrylate and also trimethylolpropane triacrylate and allyl compounds, such as allyl (meth)acrylate, triallyl cyanurate, diallyl maleate, polyallyl esters, tetraallyloxyethane, triallylamine, tetraallylethylenediamine, allyl esters of phosphoric acid and also vinylphosphonic acid derivatives as described for example in EP 343 427 A2. Useful crosslinkers b) further include pentaerythritol diallyl ether, pentaerythritol triallyl ether, pentaerythritol tetraallyl ether, polyethylene glycol diallyl ether, ethylene glycol diallyl ether, glycerol diallyl ether, glycerol triallyl ether, polyallyl ethers based on sorbitol, and also ethoxylated variants thereof. The process of the present invention may utilize di(meth)acrylates of polyethylene glycols, the polyethylene glycol used having a molecular weight between 300 and 1000.

However, particularly advantageous crosslinkers b) are di- and triacrylates of 3- to 15-tuply ethoxylated glycerol, of 3- to 15-tuply ethoxylated trimethylolpropane, of 3- to 15-tuply ethoxylated trimethylolethane, especially di- and triacrylates of 2- to 6-tuply ethoxylated glycerol or of 2- to 6-tuply ethoxylated trimethylolpropane, of 3-tuply propoxylated glycerol, of 3-tuply propoxylated trimethylolpropane, and also of 3-tuply mixedly ethoxylated or propoxylated glycerol, of 3-tuply mixedly ethoxylated or propoxylated trimethylolpropane, of 15-tuply ethoxylated glycerol, of 15-tuply ethoxylated trimethylolpropane, of 40-tuply ethoxylated glycerol, of 40-tuply ethoxylated trimethylolethane and also of 40-tuply ethoxylated trimethylolpropane.

Very particularly preferred for use as crosslinkers b) are diacrylated, dimethacrylated, triacrylated or trimethacrylated multiply ethoxylated and/or propoxylated glycerols as described for example in WO 03/104301 A1. Di- and/or triacrylates of 3- to 10-tuply ethoxylated glycerol are particularly advantageous. Very particular preference is given to di- or triacrylates of 1- to 5-tuply ethoxylated and/or propoxylated glycerol. The triacrylates of 3- to 5-tuply ethoxylated and/or propoxylated glycerol are most preferred. These are notable for particularly low residual contents (typically below 10 weight ppm) in the water-absorbing polymer and the aqueous extracts of the water-absorbing polymers produced therewith have an almost unchanged surface tension (typically at least 0.068 N/m) compared with water at the same temperature.

Examples of ethylenically unsaturated monomers c) which are copolymerizable with the monomers a) are acrylamide, methacrylamide, crotonamide, dimethylaminoethyl methacrylate, dimethylaminoethyl acrylate, dimethylaminopropyl acrylate, diethylaminopropyl acrylate, dimethylaminobutyl acrylate, dimethylaminoethyl methacrylate, diethylaminoethyl methacrylate, dimethylaminoneopentyl acrylate and dimethylaminoneopentyl methacrylate.

Useful water-soluble polymers d) include polyvinyl alcohol, polyvinylpyrrolidone, starch, starch derivatives, polyethyleneimines, polyglycols, polymers formally constructed wholly or partly of vinylamine monomers, such as partially or completely hydrolyzed polyvinylamide (so-called "polyvinylamine") or polyacrylic acids, preferably polyvinyl alcohol and starch.

The polymerization is optionally carried out in the presence of customary polymerization regulators. Suitable polymerization regulators are for example thio compounds, such as thioglycolic acid, mercapto alcohols, for example 2-mercaptoethanol, mercaptopropanol and mercaptobutanol, dodecyl mercaptan, formic acid, ammonia and amines, for example ethanolamine, diethanolamine, triethanolamine, triethylamine, morpholine and piperidine.

The monomers (a), (b) and optionally (c) are (co)polymerized with each other, optionally in the presence of the water-soluble polymers d), in 20 % to 80 %, preferably 20 % to 50 % and especially 30 % to 45 % by weight aqueous solution in the presence of polymerization initiators. Useful polymerization initiators include all compounds that disintegrate into free radicals under the polymerization conditions, examples being peroxides, hydroperoxides, hydrogen peroxide, persulfates, azo compounds and the so-called redox initiators. The use of water-soluble initiators is preferred. It is advantageous in some cases to use mixtures of various polymerization initiators, examples being mixtures of hydrogen peroxide and sodium or potassium peroxodisulfate. Mixtures of hydrogen peroxide and sodium peroxodisulfate can be used in any desired ratio. Suitable organic peroxides are for example acetylacetone peroxide, methyl ethyl ketone peroxide, tert-butyl hydroperoxide, cumene hydroperoxide, tert-amyl perpivalate, tert-butyl perpivalate, tert-butyl perneohexanoate, tert-butyl perisobutyrate, tert-butyl per-2-ethylhexanoate, tert-butyl perisononanoate, tert-butyl permaleate, tert-butyl perbenzoate, tert-butyl per-3,5,5-trimethylhexanoate and tert-amyl perneodecanoate. Further suitable polymerization initiators are azo initiators, for example 2,2'-azobis(2-amidinopropane) dihydrochloride, 2,2'-azobis(N,N-dimethylene)-isobutyramidine dihydrochloride, 2-(carbamoylazo)isobutyronitrile and 4,4'-azobis-(4-cyanovaleric acid). The polymerization initiators mentioned are used in customary amounts, for example in amounts of from 0.01 to 5 mol%, preferably 0.1 to 2 mol%, based on the monomers to be polymerized.

The redox initiators comprise, as oxidizing component, at least one of the above-indicated per compounds and a reducing component, for example ascorbic acid, glucose, sorbose, ammonium bisulfite, ammonium sulfite, ammonium thiosulfate, ammonium hyposulfite, ammonium pyrosulfite, ammonium sulfide, alkali metal bisulfite, alkali metal sulfite, alkali metal thiosulfate, alkali metal hyposulfite, alkali metal pyrosulfite, alkali metal sulfide, metal salts, such as iron(II) ions or silver ions, sodium hydroxy-methylsulfoxylate, or sulfinic acid derivatives. The reducing component of the redox initiator is preferably ascorbic acid or sodium pyrosulfite. 1 · 10⁻⁵ to 1 mol% of the reducing component of the redox initiator and 1 · 10⁻⁵ to 5 mol% of the oxidizing component are used based on the amount of monomers used in the polymerization. Instead of the oxidizing component or in addition it is also possible to use one or more water-soluble azo initiators.

A redox initiator consisting of hydrogen peroxide, sodium peroxodisulfate and ascorbic acid is preferably used. These components are used for example in the concentrations of 1 · 10⁻² mol% of hydrogen peroxide, 0.084 mol% of sodium peroxodisulfate and 2.5 · 10⁻³ mol% of ascorbic acid, based on the monomers.

It is also possible to initiate the polymerization by the numerous other known means to initiate polymerizations. On example is initiating polymerization by irradiating with radiation of sufficiently high energy, in particular ultraviolet light. Usually, when initiating polymerization by ultraviolet light, compounds are added which decompose into radicals upon irradiation by ultraviolet light. Examples of such compunds are 2-hydroxi-2-methyl-1-phenyl-1-propanone and/or alpha,-alpha-dimethoxi-alpha-phenylacetophenone.

The aqueous monomer solution may comprise the initiator in dissolved or dispersed form. However, the initiators may also be added to the polymerization reactor separately from the monomer solution.

The preferred polymerization inhibitors require dissolved oxygen for optimum effect. Therefore, the polymerization inhibitors can be freed of dissolved oxygen prior to polymerization, by inertization, i.e., by flowing an inert gas, preferably nitrogen, through them. This is accomplished by means of inert gas, which can be introduced concurrently, countercurrently or at entry angles in between. Good commixing can be achieved for example with nozzles, static or dynamic mixers or bubble columns. The oxygen content of the monomer solution is preferably lowered to less than 1 weight ppm and more preferably to less than 0.5 weight ppm prior to polymerization. The monomer solution is optionally passed through the reactor using an inert gas stream.

The preparation of a suitable polymer as well as further suitable hydrophilic ethylenically unsaturated monomers a) are described for example in DE 199 41 423 A1, EP 686 650 A1, WO 01/45758 A1 and WO 03/104300 A1.

Superabsorbents are typically obtained by addition polymerization of an aqueous monomer solution and optionally a subsequent comminution of the hydrogel. Suitable methods of making are described in the literature. Superabsorbents are obtained for example by
- gel polymerization in the batch process or tubular reactor and subsequent comminution in meat grinder, extruder or kneader, as described for example in EP 445 619 A2 and DE 19 846 413 A1;
- polymerization in kneader with continuous comminution by contrarotatory stirring shafts for example, as described for example in WO 01/38402 A1;
- polymerization on belt and subsequent comminution in meat grinder, extruder or kneader, as described for example in EP 955 086 A2, DE 38 25 366 A1 or US 6,241,928;
- emulsion polymerization, which produces bead polymers having a relatively narrow gel size distribution, as described for example in EP 457 660 A1;
- in situ polymerization on a woven fabric layer which, usually in a continuous operation, has previously been sprayed with aqueous monomer solution and subsequently been subjected to a photopolymerization, as described for example in WO 02/94328 A2, WO 02/94329 A1.

The cited references are expressly incorporated herein for details of process operation. The reaction is preferably carried out in a kneader or on a belt reactor.

Continuous gel polymerization is the economically preferred and therefore currently customary way of manufacturing superabsorbents. The process of continuous gel polymerization is carried out by first producing a monomer mixture by admixing the acrylic acid solution with the neutralizing agent, optional comonomers and/or further auxiliary materials at different times and/or locations and then transferring the mixture into the reactor or preparing the mixture as an initial charge in the reactor. The initiator system is added last to start the polymerization. The ensuing continuous process of polymerization involves a reaction to form a polymeric gel, i.e., a polymer swollen in the polymerization solvent - typically water - to form a gel, and the polymeric gel is already comminuted in the course of a stirred polymerization. The polymeric gel is subsequently dried, if necessary, and also chipped ground and sieved and is transferred for further surface treatment.

The acid groups of the hydrogels obtained are partially neutralized in an acid neutralization step, generally to an extent of at least 25 mol%, preferably to an extent of at least 50 mol% and more preferably at least 60 mol% and generally to an extent of not more than 85 mol%, preferably not more than 80 mol%, and more preferably not more than 75 mol%.

Neutralization can also be carried out after polymerization, at the hydrogel stage. But it is also possible to carry out the neutralization to the desired degree of neutralization wholly or partly prior to polymerization. In the case of partial neutralization and prior to polymerization, generally at least 10 mol%, preferably at least 15 mol% and also generally not more than 40 mol%, preferably not more than 30 mol% and more preferably not more than 25 mol% of the acid groups in the monomers used are neutralized prior to polymerization by adding a portion of the neutralizing agent to the monomer solution. The desired final degree of neutralization is in this case only set toward the end or after the polymerization, preferably at the level of the hydrogel prior to its drying. The monomer solution is neutralized by admixing the neutralizing agent. The hydrogel can be mechanically comminuted in the course of the neutralization, for example by means of a meat grinder or comparable apparatus for comminuting gellike masses, in which case the neutralizing agent can be sprayed, sprinkled or poured on and then carefully mixed in. To this end, the gel mass obtained can be repeatedly meat-grindered for homogenization.

Neutralization of the monomer solution to the desired final degree of neutralization prior to polymerization by addition of the neutralizing agent or conducting the neutralization after polymerization is usually simpler than neutralization partly prior to and partly after polymerization and therefore is preferred.

The as-polymerized gels are optionally maintained for some time, for example for at least 30 minutes, preferably at least 60 minutes and more preferably at least 90 minutes and also generally not more than 12 hours, preferably for not more than 8 hours and more preferably for not more than 6 hours at a temperature of generally at least 50 °C and preferably at least 70 °C and also generally not more than 130 °C and preferably not more than 100°C, which further improves their properties in many cases.

The neutralized hydrogel is then dried with a belt or drum dryer until the residual moisture content is preferably below 15% by weight and especially below 10 % by weight, the water content being determined by EDANA (European Disposables and Nonwovens Association) recommended test method No. 430.2-02 "Moisture content". The dry superabsorbent consequently contains up to 15 % by weight of moisture and preferably not more than 10 % by weight. The decisive criterion for classification as "dry" is in particular a sufficient flowability for handling as a powder, for example for pneumatic conveying, pack filling, sieving or other processing steps involved in solids processing technology. Optionally, however, drying can also be carried out using a fluidized bed dryer or a heated ploughshare mixer. To obtain particularly colourless products, it is advantageous to dry this gel by ensuring rapid removal of the evaporating water. To this end, dryer temperature must be optimized, air feed and removal has to be policed, and at all times sufficient venting has to be ensured. Drying is naturally all the more simple - and the product all the more colourless - when the solids content of the gel is as high as possible. The solvent fraction at addition polymerization is therefore set such that the solid content of the gel prior to drying is therefore generally at least 20 % by weight, preferably at least 25 % by weight and more preferably at least 30% by weight and also generally not more than 90 % by weight, preferably not more than 85 % by weight and more preferably not more than 80 % by weight. It is particularly advantageous to vent the dryer with nitrogen or some other nonoxidizing inert gas. Optionally, however, simply just the partial pressure of oxygen can be lowered during drying to prevent oxidative yellowing processes. But in general adequate venting and removal of the water vapour will likewise still lead to an acceptable product. A very short drying time is generally advantageous with regard to colour and product quality.

The dried hydrogel (which is no longer a gel (even though often still called that) but a dry polymer having superabsorbing properties, which comes within the term "superabsorbent") is preferably ground and sieved, useful grinding apparatus typically including roll mills, pin mills, hammer mills, cutting mills or swing mills. The particle size of the sieved, dry hydrogel is preferably below 1000 µm, more preferably below 900 µm and most preferably below 850 µm and preferably above 80 µm, more preferably above 90 µm and most preferably above 100 µm.

Very particular preference is given to a particle size (sieve cut) in the range from 106 to 850 µm. Particle size is determined according to EDANA (European Disposables and Nonwovens Association) recommended test method No. 420.2-02 "Particle size distribution".

The dry superabsorbing polymers thus produced are typically known as "base polymers" and are then surface postcrosslinked. Surface postcrosslinking can be accomplished in a conventional manner using dried, ground and classified polymeric particles. For surface postcrosslinking, compounds capable of reacting with the functional groups of the base polymer by crosslinking are applied, usually in the form of a solution, to the surface of the base polymer particles. Usually, a surface crosslinker solution is first applied to the base polymer by contacting base polymer and crosslinker solution, and then the formation of surface crosslinks is effected or completed by heat treatment. The contacting step leads to a coating of surface crosslinking solution on the base polymer particles, possibly to some crosslinking depending on reactivity of the crosslinker and temperature applied during the contacting step, and the heat treatment step to a finished surface-crosslinked superabsorbent.

According to the invention, the base polymer particles are surface crosslinked with at least one organic (post)crosslinker and a polyvalent metal salt, the latter being applied in a solution also comprising an alcohol. Contacting the base polymer with a surface postcrosslinking solution (again, "surface crosslinking" is used synonymously) is typically carried out by spraying the surface postcrosslinking solution of the surface postcrosslinker ("surface crosslinker") onto the hydrogel or the dry base polymer powder.

Suitable organic postcrosslinking agents are for example:
- di- or polyepoxides, for example di- or polyglycidyl compounds such as phosphonic acid diglycidyl ether, ethylene glycol diglycidyl ether, bischlorohydrin ethers of polyalkylene glycols,
- alkoxysilyl compounds,
- polyaziridines, compounds comprising aziridine units and based on polyethers or substituted hydrocarbons, for example bis-N-aziridinomethane,
- polyamines or polyamidoamines and also their reaction products with epichlorohydrin,
- polyols such as ethylene glycol, 1,2-propanediol, 1,4-butanediol, glycerol, methyltriglycol, polyethylene glycols having an average molecular weight Mw of 200 - 10 000, di- and polyglycerol, pentaerythritol, sorbitol, the ethoxylates of these polyols and also their esters with carboxylic acids or carbonic acid such as ethylene carbonate or propylene carbonate,
- carbonic acid derivatives such as urea, thiourea, guanidine, dicyandiamide, 2-oxazolidinone and its derivatives, bisoxazoline, polyoxazolines, di- and polyisocyanates,
- di- and poly-N-methylol compounds such as for example methylenebis(N-methylolmethacrylamide) or melamine-formaldehyde resins,
- compounds having two or more blocked isocyanate groups such as for example trimethylhexamethylene diisocyanate blocked with 2,2,3,6-tetramethylpiperidin-4-one.

If necessary, acidic catalysts can be added, examples being p-toluenesulfonic acid, phosphoric acid, boric acid or ammonium dihydrogenphosphate.

Particularly suitable postcrosslinking agents are di- or polyglycidyl compounds such as ethylene glycol diglycidyl ether, the reaction products of polyamidoamines with epichlorohydrin, 2-oxazolidinone and N-hydroxyethyl-2-oxazolidinone.

The solvent used for the surface postcrosslinker is a customary suitable solvent, examples being water, alcohols, DMF, DMSO and also mixtures thereof. Examples of suitable alcohols are monools, diols, triols or polyols, preferably of alcohols having one to eight carbon atoms. Preferred are the propanoles. Most preferably, the alcohol is selected from the group consisting of propylene glycol, 1,3-propandiol, 1-propanol, 2-propanol and mixtures thereof. Particular preference is given to water and water-alcohol mixtures, examples being water-methanol, water-1,2-propanediol, water-2-propanol and water-1,3-propanediol.

The spraying with a solution of the postcrosslinker is preferably carried out in mixers having moving mixing implements, such as screw mixers, paddle mixers, disk mixers, plowshare mixers and shovel mixers. Particular preference is given to vertical mixers and very particular preference to plowshare mixers and shovel mixers. Useful and known mixers include for example Lodige^{®}, Bepex^{®}, Nauta^{®}, Processall^{®} and Schugi^{®} mixers. Very particular preference is given to high speed mixers, for example of the Schugi-Flexomi^{®} or Turbolizer^{®} type.

The polymer is further surface crosslinked using a polyvalent metal salt. Preferably, the polyvalent metal salt is water-soluble. Water-soluble polyvalent metal salts comprise bi- or more highly valent ("polyvalent") metal cations capable of reacting with the acid groups of the polymer to form complexes. Examples of polyvalent cations are metal cations such as Mg²⁺, Ca²⁺, Al³⁺, Sc³⁺, Ti⁴⁺, Mn²⁺, Fe^{2+/3+}, Co²⁺, Ni²⁺, Cu²⁺, Zn²⁺, Y³⁺, Zr⁴⁺, La³⁺, Ce⁴⁺, Hf⁴⁺, and Au³⁺. Preferred metal cations are Mg²⁺, Ca²⁺, Al³⁺, Ti⁴⁺, Zr⁴⁺ and La³⁺, and particularly preferred metal cations are Al³⁺, Ti⁴⁺ and Zr⁴⁺. Most preferred is Al³⁺. The metal cations can be used not only alone but also in admixture with each other. Of the metal cations mentioned, any metal salt can be used that has sufficient solubility in the solvent to be used. Metal salts with weakly complexing anions such as for example chloride, nitrate and sulphate, hydrogen sulphate, carbonate, hydrogen carbonate, nitrate, phosphate, hydrogen phosphate, dihydrogen phosphate and carboxylate, such as acetate and lactate, are particularly suitable. It is particularly preferred to use aluminium sulfate.

The superabsorbent is contacted with the polyvalent metal salt generally in the form of a polyvalent metal salt solution. Examples of suitable solvents are water, alcohols DMF, DMSO and also mixtures thereof. Examples of suitable alcohols are monools, diols, triols or polyols, preferably of alcohols having one to eight carbon atoms. Preferred are the propanoles. Most preferably, the alcohol is selected from the group consisting of propylene glycol, 1,3-propandiol, 1-propanol, 2-propanol and mixtures thereof. Particular preference is given to water and water-alcohol mixtures such as for example water-methanol, water-1,2-propanediol, water-2-propanol and water-1,3-propanediol.

Contacting the superabsorbent polymer with solution of a polyvalent cation is carried out in the same way as that described above for organic surface postcrosslinker.

The polyvalent metal salt solution is applied in the presence of an alcohol. It is possible, although not preferred because of stability concerns, to apply a stock solution containing organic crosslinker, polyvalent metal salt and alcohol as surface crosslinking agent. It is possible, however, and one preferred embodiment of the present invention, to mix a solution containing organic crosslinker with a solution of polyvalent metal salt, wherein at least one of these two solutions contains an alcohol, and if only one contains alcohol, preferably the solution of organic crosslinker contains it, directly in or shortly upstream of the nozzle used for spraying the surface crosslinking agent, so that the superabsorbent is treated with a mixture comprising organic crosslinker, polyvalent metal salt and alcohol. In another preferred embodiment of the invention, the superabsorbent is first treated with a solution containing an organic crosslinker and then with a solution containing polyvalent metal salt. Again, at least one of these two solutions contains an alcohol, and if only one contains alcohol, it is preferably the solution containing the organic crosslinker.

Generally, the amount of organic crosslinker applied to the superabsorbent is at least 50 wt.-ppm, preferably at least 100 wt.-ppm, more preferably at least 200 wt.-ppm and generally not more than 1 wt.-%, preferably not more than 0,5 wt.-% and more preferably not more than 2000 wt.-ppm, based on the weight of the base polymer. The amount of polyvalent metal salt applied is generally at least 50 wt.-ppm, preferably 1000 wt.-ppm and more preferably at least 2000 wt.-ppm and generally not more than 5 wt.-%, preferably not more than 3 wt.-% and more preferably not more than 1 wt.-%, based on the weight of the base polymer. The amount of alcohol applied is generally at least 1000 wt.-ppm, preferably at least 2000 wt.-ppm and more preferably at least 3000 wt.-% and generally not more than 15 wt.-%, preferably not more than 10 wt.-% and more preferably not more than 5 wt.-%, based on the weight of base polymer.

The step of contacting a superabsorbent base polymer with an organic crosslinker and a polyvalent metal salt solution in the presence of an alcohol can be optionally, and preferably is, followed by a thermal treatment step, essentially to effect the surface-postcrosslinking reaction (yet usually just referred to as "drying"), preferably in a downstream heated mixer ("dryer") at a temperature of generally at least 50 °C, preferably at least 80 °C and more preferably at least 80 °C and also generally not more than 300 °C, preferably not more than 250 °C and more preferably not more than 200 °C. The average residence time (i.e., the averaged residence time of the individual particles of superabsorbent) in the dryer of the superabsorbent to be treated is generally at least 1 minute, preferably at least 3 minutes and more preferably at least 5 minutes and also generally not more than 6 hours, preferably 2 hours and more preferably not more than 1 hour. As well as the actual drying taking place, not only any products of scis-sioning present but also solvent fractions are removed. Thermal drying is carried out in customary dryers such as tray dryers, rotary tube ovens or heatable screws, preferably in contact dryers. Preference is given to the use of dryers in which the product is agitated, i.e., heated mixers, more preferably shovel dryers and most preferably disk dryers. Bepex^{®} dryers and Nara^{®} dryers are suitable dryers for example. Fluidized bed dryers can also be used. But drying can also take place in the mixer itself, by heating the jacket or blowing a preheated gas such as air into it. But it is also possible for example to utilize an azeotropic distillation as a drying process. The crosslinking reaction can take place not only before but also during drying.

When water is present in the base polymer or organic crosslinker solution, it is preferred to conduct the heat treatment at conditions sufficient to reduce the moisture content of the resulting surface-crosslinked superabsorbent to a value of less than 1 wt.%, based on the total amount of surface-crosslinked superabsorbent.

The surface-crosslinked superabsorbent is then re-moisturised by adding water.

Methods for adding liquids such as water to particulate solids such as superabsorbents are known, and any known method may be used. In all cases, water is preferably added while the superabsorbent is gently agitated in a mixer to achieve a homogeneous distribution of moisture in the superabsorbent. There are two particularly convenient ways to add water to superabsorbents. One is to provide a separate re-moisturizing mixer and the other is to add water in a cooler employed for cooling the product after the heat-treatment that finalizes the surface postcrosslinking.

Mixers suitable for re-moisturising superabsorbents are known. The type of mixer to be used is not particularly limited, for example single or double screw mixers, paddle mixers, vortex mixers, rolling mixers, ribbon mixers, air mixers, tumbling mixers and fluidized beds, or any other apparatus that allows homogeneous mixing of particulate solids with liquids. Preference is given to the use of continuously operating paddle mixers, for example the paddle mixers obtainable from Nara Machinery Co., Ltd., Tokyo, Japan, the Turbulizer^{®} obtainable from Bepex International LLC, Minneapolis, U.S.A. or from Hosokawa Micron BV, Doetinchem, The Netherlands, or the paddle mixers obtainable from Gebr. Ruberg GmbH & Co. KG, Nieheim, Germany.

Water can be added in any way and is preferably added by spraying. Water may be added using one or more nozzles, It is preferred to use an even number of nozzles. Any nozzle suitable to spray water can be used. When using the preferred continuous paddle mixer, the superabsorbent is gradually advanced along the shaft(s) (a single-shaft-mixer is preferred), and water is added through one or more nozzles generally located at a position corresponding to at least 0 %, preferably at least 30 and generally not more than 90 %, preferably not more than 70 % of the average residence time of superabsorbent in the cooler/mixer. If more than one nozzles are used, water may be added at several places in the mixer, such as for instance one nozzle or set of nozzles located at a position or positions corresponding to the range of 20 % to 40 %, another one or set of located at a position or positions corresponding to the range of 60 to 80 % of the average residence time.

The temperature at which water is added typically is in the range of 40 to 95 °C. The average residence time of superabsorbent in there-moisturizing step typically is in the range of 5 to 120 minutes.

Generally, the amount of water added is sufficient to achieve a moisture content of the re-moisturized superabsorbent of at least 1 wt.%, preferably at least 3 wt.% and generally not more than 7 wt.%, preferably not more than 5 wt.%, based on the total weight of re-moisturized superabsorbent.

Water may also be added in a cooling step employed for cooling the product after the heat-treatment that finalizes the surface postcrosslinking.

After any drying or heat treatment step, it is advantageous but not absolutely necessary to cool the product after drying. Cooling can be carried out continuously or discontinuously, conveniently by conveying the product continuously into a cooler downstream of the dryer. Any apparatus known for removing heat from pulverulent solids can be used, in particular any apparatus mentioned above as a drying apparatus, provided it is supplied not with a heating medium but with a cooling medium such as for example with cooling water, so that heat is not introduced into the superabsorbent via the walls and, depending on the design, also via the stirrer elements or other heat-exchanging surfaces, but removed from the superabsorbent. Preference is given to the use of coolers in which the product is agitated, i.e., cooled mixers, for example shovel coolers, disk coolers or paddle coolers, for example Nara^{®} or Bepex^{®} coolers. The superabsorbent can also be cooled in a fluidized bed by blowing a cooled gas such as cold air into it. The cooling conditions are set such that a superabsorbent having the temperature desired for further processing is obtained. Typically, the average residence time in the cooler will be in general at least 1 minute, preferably at least 3 minutes and more preferably at least 5 minutes and also in general not more than 6 hours, preferably 2 hours and more preferably not more than 1 hour, and cooling performance will be determined such that the product obtained has a temperature of generally at least 0 °C, preferably at least 10 °C and more preferably at least 20 °C and also generally not more than 100 °C, preferably not more than 80 °C and more preferably not more than 60 °C.

In a preferred embodiment of the present invention, re-moisturizing is done during a cooling step after surface postcrosslinking. The mixing apparatus described above usually is equipped with heat transfer equipment and can directly be used as coolers. In that case, the process conditions described for the re-moisturizing step may be used for the cooling step as well, although it is be possible to use one part of the same mixer/cooler for re-moisturizing and another for cooling at different process conditions, depending on the particular apparatus used. In any case, water preferably is added only at positions in the cooler where the superabsorbent temperature is below 100 °C.

Optionally, the superabsorbent is provided with further customary additives and auxiliary materials to influence storage or handling properties. Examples thereof are permeability enhancing agents other than surface crosslinkers, such as particulate solids (silica is widely used) or cationic polymers to further enhance permeability, colorations, opaque additions to improve the visibility of swollen gel, which is desirable in some applications, surfactants, cohesion control agents to improve flowability or the like. These additives and auxiliary materials can each be added in separate processing steps by methods generally known in the art, but one convenient method may be to add them to the superabsorbent in the cooler, for example by spraying the superabsorbent with a solution or adding them in finely divided solid or in liquid form, if this cooler provides sufficient mixing quality. It is possible and may be rather convenient to add such additives and auxiliaries partly or totally together with the water in the re-moisturizing step, preferably a combined re-moisturizing and cooling step in a cooler/mixer after surface postcrosslinking as described above. One convenient method for adding particulate solids in a cooler/mixer may be spraying with water in two-or multi-component nozzles. Generally, however, it is preferred to re-moisturise the superabsorbent with pure water.

The final surface-crosslinked superabsorbent is optionally ground and/or sieved in a conventional manner. Grinding is typically not necessary, but the sieving out of agglomerates which are formed or undersize is usually advisable to set the desired particle size distribution for the product. Agglomerates and undersize are either discarded or preferably returned into the process in a conventional manner and at a suitable point; agglomerates after comminution. The superabsorbent particle size is preferably not more than 1000 µm, more preferably not more than 900 µm, most preferably not more than 850 µm, and preferably at least 80 µm, more preferably at least 90 µm and most preferably at least 100 µm. Typical sieve cuts are for example 106 to 850 µm or 150 to 850 µm.

We have further found superabsorbent produced by the process of the present invention and hygiene articles comprising the superabsorbent produced by the process of the present invention. Hygiene articles in accordance with the present invention are for example those intended for use in mild or severe incontinence, such as for example inserts for severe or mild incontinence, incontinence briefs, also diapers, training pants for babies and infants or else feminine hygiene articles such as liners, sanitary napkins or tampons. Hygiene articles of this kind are known. The hygiene articles of the present invention differ from known hygiene articles in that they comprise the superabsorbent of the present invention. We have also found a process for producing hygiene articles, this process comprising utilizing at least one superabsorbent of the present invention in the manufacture of the hygiene article in question. Processes for producing hygiene articles using superabsorbent are otherwise known.

The present invention further provides for the use of the composition of the present invention in training pants for children, shoe inserts and other hygiene articles to absorb bodily fluids. The composition of the present invention can also be used in other technical and industrial fields where liquids, in particular water or aqueous solutions, are absorbed. These fields are for example storage, packaging, transportation (as constituents of packaging material for water- or moisture-sensitive articles, for example for flower transportation, also as protection against mechanical impacts); animal hygiene (in cat litter); food packaging (transportation of fish, fresh meat; absorption of water, blood in fresh fish or meat packs); medicine (wound plasters, water-absorbing material for burn dressings or for other weeping wounds), cosmetics (carrier material for pharmachemicals and medicaments, rheumatic plasters, ultrasonic gel, cooling gel, cosmetic thickeners, sun protection); thickeners for oil-in-water and water-in-oil emulsions; textiles (moisture regulation in textiles, shoe inserts, for evaporative cooling, for example in protective clothing, gloves, headbands); chemical engineering applications (as a catalyst for organic reactions, to immobilize large functional molecules such as enzymes, as adhesion agent in relation to agglomerations, heat storage media, filter aids, hydrophilic component in polymeric laminates, dispersants, superplasticizers); as auxiliaries in powder injection moulding, in building construction and engineering (installation, in loam-based renders, as a vibration-inhibiting medium, auxiliaries in tunnel excavations in water-rich ground, cable sheathing); water treatment, waste treatment, water removal (de-icing agents, reusable sandbags); cleaning; agrotech (irrigation, retention of melt water and dew deposits, composting additive, protection of forests against fungal/insect infestation, delayed release of active components to plants); for firefighting or for fire protection; coextrusion agents in thermoplastic polymers (for example to hydrophilize multilayered films); production of films and thermoplastic mouldings able to absorb water (for example rain and dew water storage films for agriculture; superabsorbent-containing films for keeping fruit and vegetables fresh which are packed in moist films; superabsorbent-polystyrene coextrudates, for example for food packaging such as meat, fish, poultry, fruit and vegetables); or as carrier substance in formulations of active components (pharma, crop protection).

### Superabsorbent Property Test Methods

### Centrifuge Retention Capacity (CRC)

The method for determination of the Centrifuge Retention Capacity (CRC) is described in US patent application no. US 2002/0 165 288 A1, paragraphs [0105] and [0106].

### Absorption Under Load 0.9 psi (AUL 0.9 psi)

The procedure for determining AUL 0.9 psi is disclosed in WO 00/62825 , pages 22 - 23 (referred to as "Absorbency Under Load" therein). A 317 gram weight is used to obtain the AUL 0.9 psi value.

### Flow Rate

Flow Rate is determined using EDANA (European Disposbles and Nonwovens Association, Avenue Eugène Plasky, 157, 1030 Brussels, Belgium, www.edana.org) Test Method 450.2-02 (available from EDANA).

### Particle Size Distribution (PSD)

Particle Size Distribution is determined using EDANA (European Disposbles and Nonwovens Association, Avenue Eugène Plasky, 157, 1030 Brussels, Belgium, www.edana.org) Test Method 420.2-02 (available from EDANA).

### Residual Moisture Content

The method for determination of the Residual Moisture Content is described in WO 01/25290 A1, page 19, line 24 through page 20, line 8.

### Examples

### Example 1: Polymer A (kneader process, no alumina) (comparative)

A kneader with two sigma shafts (Model LUK 8.0 K2 manufactured by Coperion Werner & Pfleiderer GmbH & Co. KG, Stuttgart, Germany) was purged with nitrogen and filled with a nitrogen flushed mixture of 5166 g of a 37.7 wt.-% aqueous solution of sodium acrylate, 574 g of acrylic acid and 720 g of deionized water. Subsequently, 4.1 g of ETMPTA (ethoxylated trimethylolpropane triacrylate, on average 15 mol of ethylene oxide per mol of trimethylolpropane), 10 g of a 0.75 wt.-% aqueous ascorbic acid solution, 16.6 g of a 15 wt.-% aqueous sodium persulfate solution and 3.75 g of a 3 wt.-% aqueous hydrogen peroxide solution were added. The kneader was operated at maximum speed of 98 rpm of one shaft and 49 rpm of the other. Directly after the addition of hydrogen peroxide the solution was heated by starting to circulate hot oil (80 °C) through the heating jacket. After the peak temperature was reached the heating was stopped and the polymer gel was allowed to react for another 14 minutes. Subsequently the gel was cooled down to approximately 65 °C and placed on a tray. The gel was dried in an oven at 170 °C for 75 min ( approx. 1000 g of gel per tray). Finally the dried gel was milled three times by means of a roller mill (model LRC 125/70 manufactured by Bauermeister Zerkleinerungstechnik GmbH, Norderstedt, Germany), using gap sizes of 1000 µm, 600 µm and 400 µm. The product was then sifted, and the 850-150 micron cut selected.

1 kg of this polymer powder was treated using a Lödige M5 mixer with a surface crosslinker solution consisting of 0.08 wt.-% 2-oxazolidinone, 1.93 wt.-% de-ionised water and 0.94 wt.-% of 2-propanol (all amounts based on weight of the polymer powder prior to treatment) via an atomizer nozzle. The mixture was heated for one hour at 180 °C and then cooled to room temperature. The cooled product was then sifted, and the 850-150 micron cut designated Polymer C.

The properties of the polymer thus obtained are summarised in table 1.

### Example 2: Polymer B (kneader process, alumina-coated)

Polymer B was obtained following the procedure of Example 1, however, using the following amounts of chemicals:
5166 g of 37.7 wt.-% aqueous sodium acrylate solution
574 g acrylic acid
720 g de-ionised water
10.7 g ETMPTA,
10 g of 0.75 wt.-% aqueous ascorbic acid solution
16.6 g of 15 wt.-% aqueous sodium persulfate solution
3.75 g of 3 wt.-% aqueous hydrogen peroxide solution
surface crosslinking solution (amounts based on weight of the polymer powder prior to treatment):
0.12 wt.-% of Denacol^{®} EX 810 (ethylene glycol diglycidyl ether, obtained from Nagase ChemteX Corporation, Osaka, Japan)
0.6 wt.-% of propylene glycol
1 wt.-% of deionized water
3.1 wt.-% of 17 wt.-% aqueous aluminum sulfate solution

The properties of the polymer thus obtained are summarised in table 1.

### Example 3: Polymer C (static polymerisation, no alumina) (comparative)

1121.2 g of glacial acrylic acid were added into a 4 liter glass reaction kettle equipped with a lid, thermocouple and nitrogen purge tube. Next, 5.49 g of pentaerythritol triallyl ether, 2346.88 g of de-ionised water, 1.77 g of Kymene^{®} 736 (aqueous polyamidoamine epichlorohydrine adduct solution, obtained from Hercules Incorporated, Wilmington, Delaware, U.S.A.), and 500 g of ice made from deionized water were added. The monomer solution was then purged with nitrogen for 30 minutes. After 30 min, 12.33 g of 1 wt.-% aqueous hydrogen peroxide solution and 12.33 g of 1 wt.-% aqueous ascorbic acid solution were simultaneously added. After this initiation (the temperature rose rapidly and the monomer solution thickened), the purge tube was removed from the monomer solution and placed in the head space until the reaction temperature had peaked. The gel was kept overnight in an insulated container.

The gel was removed from the container and chopped once using a meat chopper (model 4812, manufactured by Hobart Corporation, Troy, Ohio, U.S.A.). 838.04 g of 50 wt.-% aqueous NaOH solution were added to the gel as evenly as possible. The gel was then kneaded thoroughly by hand and chopped twice using the Hobart meat chopper. Next, a solution of 10.33 g sodium metabisulfite in 200 g of deionized water was added to the gel as evenly as possible. The gel was again kneaded thoroughly by hand and chopped again twice using the Hobart meat chopper. The gel was then placed on a drum dryer (heated by steam, pressure >80 psi). The dried polymer flakes were collected and first crushed by hand, then milled using a pin mill (model ZM 200, manufactured by Retsch GmbH, Haan, Germany) at 14,000 rpm. The resulting powder was sifted to 850-160 micron using a sifter (model KS 1000, manufactured by Retsch GmbH, Haan, Germany) on setting 7 for ten minutes.

1 kg of the polymer powder was put into a mixer (laboratory ploughshare mixer model M 5, manufactured by Gebrüder Lödige Maschinenbau GmbH, Paderborn, Germany). A surface crosslinking solution was prepared by mixing 0.37 g of Denacol^{®} EX 810 (ethylene glycol diglycidyl ether, obtained from Nagase ChemteX Corporation, Osaka, Japan), 13.33 g of propylene glycol and 26.67 g of deionized water into a beaker. At a mixer speed of 449 rpm, the surface crosslinker solution was added dropwise using a syringe to the polymer powder over a three minute time period. The mixer was then stopped, product sticking to the wall of the mixing vessel was scraped off (and reunited with the bulk), and mixing was continued for two more minutes at 449 rpm. The batch was then discharged into two stainless steel pans and placed in an oven at 120 °C for one hour. The pans the were removed from the oven and allowed to cool in a desiccator. The cooled product was then sifted, and the 850-150 micron cut designated Polymer C.

The properties of the polymer thus obtained are summarised in table 1.

### Example 4: Polymer D (static polymerisation)

Polymer D was obtained following the procedure of Example 3, however, using the following amounts of chemicals:
polymerisation:
   1040.00 g of glacial acrylic acid
   3.12 g of pentaerythritol triallyl ether,
   2430.17 g of de-ionised water,
   3.83 g of Kymene^{®} 736
   500 g of ice made from de-ionised water
   11.44 g of 1 wt.-% aqueous hydrogen peroxide solution
   11.44 g of 1 wt.-% aqueous ascorbic acid solution
neutralization:
   843.56 g of 50 wt.-% aqueous NaOH solution
   10.40 g sodium metabisulfite dissolved in 200 g of de-ionised water
surface crosslinking solution:
   1.20 g of Denacol^{®} EX 810
   20.00 g of propylene glycol
   20.00 g of deionized water
   35.80 g of 27 wt.-% aqueous aluminum sulfate solution

The properties of the polymer thus obtained are summarised in table 1.

### Example 5: Polymer E (kneader process, alumina-coated without organic solvent)

Polymer E was obtained following the procedure of Example 1, however, using the following amounts of chemicals:
5166 g of 37.7 wt.-% aqueous sodium acrylate solution
574 g acrylic acid
720 g de-ionised water
10.7 g ETMPTA,
10 g of 0.75 wt.-% aqueous ascorbic acid solution
16.6 g of 15 wt.-% aqueous sodium persulfate solution
3.75 g of 3 wt.-% aqueous hydrogen peroxide solution
surface crosslinking solution (amounts based on weight of the polymer powder prior to treatment):
0.12 wt.-% of Denacol^{®} EX 810
1.6 wt.-% of deionized water
3.1 wt.-% of 17 wt.-% aqueous aluminum sulfate solution

The properties of the polymer thus obtained are summarised in table 1.

### Example 6: Polymer F (static polymerisation, alumina-coated without organic solvent)

Polymer F was obtained following the procedure of Example 3, however, using the following amounts of chemicals:
polymerisation:
   1040.00 g of glacial acrylic acid
   3.12 g of pentaerythritol triallyl ether,
   2430.17 g of de-ionised water,
   3.83 g of Kymene^{®} 736
   500 g of ice made from de-ionised water
   11.44 g of 1 wt.-% aqueous hydrogen peroxide solution
   11.44 g of 1 wt.-% aqueous ascorbic acid solution
neutralization:
   843.56 g of 50 wt.-% aqueous NaOH solution
   10.40 g sodium metabisulfite dissolved in 200 g of de-ionised water
surface crosslinking solution (amounts based on weight of the polymer powder prior to treatment):
   1.20 g of Denacol^{®} EX 810
   40.00 g of deionized water
   35.80 g of 27 wt.-% aqueous aluminum sulfate solution

The properties of the polymer thus obtained are summarised in table 1.

### Example 7: Re-Moisturising Polymer B

1 kg of polymer B was pre-heated to 60 °C in a laboratory oven and then filled into a Lödige M5 mixer preheated to this temperature and rotated at 449 rpm. The product temperature was kept constant at 60 °C by heating the mixer's double-wall heating jacket throughout the re-moisturising and mixing step. 50 g of de-ionised water were added dropwise during a five-minute period using a syringe. Thereafter, the rotating speed was reduced to 79 rpm and the product further rotated for 20 minutes at this speed. A free-flowing powder was obtained. It did not contain any visible lumps (agglomerates).

The properties of the polymer thus obtained are summarised in table 1.

### Example 8: Re-Moisturising Polymer D

Polymer D was re-moisturised using the procedure of Example 7 except that only 40 g of water were added. A free-flowing powder was obtained. It did not contain any visible lumps.

The properties of the polymer thus obtained are summarised in table 1.

### Example 9 (comparative): Re-Moisturising Polymer A

Polymer A was re-moisturised using the procedure of Example 7. A sticky product of wet appearance was obtained which contained visible lumps.

The properties of the polymer thus obtained are summarised in table 1. CRC, AUL and Moisture Content were determined after removing particles of > 850 µm diameter. The low moisture content value indicates that most of the water is concentrated in the lumps.

### Example 10 (comparative): Re-Moisturising Polymer C

Polymer C was re-moisturised using the procedure of Example 8. A sticky product of wet appearance was obtained which contained visible lumps.

The properties of the polymer thus obtained are summarised in table 1. CRC, AUL and Moisture Content were determined after removing particles of > 850 µm diameter. The low moisture content value indicates that most of the water is concentrated in the lumps.

### Example 11 (comparative): Re-Moisturising Polymer A using alumina salt solution

Polymer A was re-moisturised using the procedure of Example 7 except that 55.6 g of a 10 wt.-% aqueous solution of aluminium sulfate (any wt.-% values of aluminium salt in solution were calculated disregarding any crystal water content) were added instead of water. A sticky product of wet appearance was obtained which contained visible lumps.

The properties of the polymer thus obtained are summarised in table 1. CRC, AUL and Moisture Content were determined after removing particles of > 850 µm diameter. The low moisture content value indicates that most of the water is concentrated in the lumps.

### Example 12 (comparative): Re-Moisturising Polymer E

Polymer E was re-moisturised using the procedure of Example 7. A sticky product of wet appearance was obtained which contained visible lumps.

The properties of the polymer thus obtained are summarised in table 1. CRC, AUL and Moisture Content were determined after removing particles of > 850 µm diameter. The low moisture content value indicates that most of the water is concentrated in the lumps.

### Example 13 (comparative): Re-Moisturising Polymer F

Polymer F was re-moisturised using the procedure of Example 8. A sticky product of wet appearance was obtained which contained visible lumps.

The properties of the polymer thus obtained are summarised in table 1. CRC, AUL and Moisture Content were determined after removing particles of > 850 µm diameter. The low moisture content value indicates that most of the water is concentrated in the lumps.

**Table 1**

| Example | CRC | AUL 0.9 psi | PSD | | | | | | Flow Rate | Moisture |
|---|---|---|---|---|---|---|---|---|---|---|
| | [g/g] | [g/g] | [wt.-%] | | | | | | [g/s] | wt.-%] |
| | | | >850 | 600-850 | 300-600 | 90-300 | 45-90 | <45 | | |
| | | | [µm] | | | | | | | |
| 1^{*)} | 31.6 | 22.6 | 0.2 | 27.5 | 53.8 | 18.4 | 0.1 | 0 | 11.0 | 0.2 |
| 2 | 27.8 | 20.2 | 0.1 | 24.2 | 54.9 | 20.6 | 0.2 | 0 | 11.3 | 0.2 |
| 3^{*)} | 32.0 | 22.1 | 0.1 | 19.0 | 45.9 | 34.7 | 0.2 | 0.1 | 10.9 | 0.8 |
| 4 | 28.3 | 19.1 | 0.1 | 19.5 | 41.2 | 39.0 | 0.2 | 0 | 11.6 | 0.9 |
| 5^{*)} | 28,5 | 19,4 | 0,2 | 28,4 | 53,5 | 17,8 | 0,1 | 0 | 11,2 | 0,3 |
| 6^{*)} | 28,9 | 18,5 | 0,3 | 23,4 | 41,4 | 34,8 | 0,1 | 0 | 11,5 | 0,8 |
| 7 | 27.0 | 19.9 | 0.3 | 26.0 | 56.1 | 17.6 | 0 | 0 | 11.1 | 4.3 |
| 8 | 27.4 | 18.8 | 0.2 | 21.2 | 43.3 | 35.2 | 0.1 | 0 | 11.3 | 4.1 |
| 9^{*)} | 31.1 | 21.7 | 10.5 | 43.6 | 36.6 | 9.3 | 0 | 0 | - | 1.6 |
| 10^{*)} | 30.5 | 21.1 | 8.3 | 32.7 | 40.1 | 18.9 | 0 | 0 | - | 1.9 |
| 11^{*)} | 29.9 | 21.6 | 5.3 | 37.4 | 45.9 | 11.4 | 0 | 0 | - | 2.0 |
| 12^{*)} | 27,8 | 19,2 | 6,4 | 36,5 | 44,6 | 12,5 | 0 | 0 | - | 2,1 |
| 13^{*)} | 28,1 | 18,3 | 7,4 | 38,2 | 32,7 | 21,7 | 0 | 0 | - | 2,0 |

| | | | | | | | | | | |
|---|---|---|---|---|---|---|---|---|---|---|
| ^{*)} comparative | | | | | | | | | | |

The examples demonstrate that re-moisturising is particularly beneficial if the superabsorbent has been first surface-crosslinked including crosslinking with Al³⁺ in the presence of an organic solvent. In particular, the superabsorbent remains a free-flowing powder without significant lump formation.

## Claims

1. Process for producing a re-moisturised, surface-crosslinked superabsorbent that comprises the steps of contacting a superabsorbent base polymer with an organic crosslinker and a polyvalent metal salt solution in the presence of an alcohol selected from the group consisting of propylene glycol, 1,3-propandiol, 1-propanol, 2-propanol and mixtures thereof, heat-treating to produce a surface-crosslinked, dry superabsorbent and re-moisturising the surface-crosslinked dry superabsorbent by adding pure water to achieve a moisture content of the re-moisturized superabsorbent of at least 1 wt.% and not more than 7 wt.%, based on the total weight of re-moisturized superabsorbent.

2. The process of claim 1, wherein the base polymer is simultaneously contacted with an organic crosslinker and a polyvalent metal salt solution in the presence of an alcohol by contacting the base polymer with a mixture comprising organic crosslinker, polyvalent metal salt and alcohol.

3. The process of claim 1, wherein the base polymer is first contacted with a mixture comprising an organic crosslinker and an alcohol and then with a polyvalent metal salt solution.

4. The process of any of claims 1 to 3, wherein the polyvalent metal salt comprises a polyvalent metal cation selected from the group consisting of Al³+, Ti⁴⁺ and Zr⁴⁺

5. The process of any of claims 1 to 4, wherein the polyvalent metal cation is Al³⁺.

6. The process of any of claims 1 to 5, wherein the re-moisturised, surface-crosslinked superabsorbent is re-moisturised to a moisture content of 3 to 5 wt.-% based on the total weight of superabsorbent.

7. A re-moisturised, surface-crosslinked superabsorbent obtainable by the process defined in any of the preceding claims.

8. A hygiene article comprising the superabsorbent of claim 7.

## Patentansprüche

1. Verfahren zur Herstellung eines nachbefeuchteten, oberflächenvernetzten Superabsorbers, umfassend die Schritte des Inberührungbringens eines Superabsorber-Grundpolymers mit einem organischen Vernetzer und einer Lösung eines mehrwertigen Metallsalzes in Gegenwart eines Alkohols aus der Gruppe bestehend aus Propylenglykol, 1,3-Propandiol, 1-Propanol, 2-Propanol und Mischungen davon, des Wärmebehandelns zur Bildung eines oberflächenvernetzten, trockenen Superabsorbers und des Nachbefeuchtens des oberflächenvernetzten trockenen Superabsorbers durch Zugabe von reinem Wasser zur Einstellung eines Feuchtigkeitsgehalts des nachbefeuchteten Superabsorbers von mindestens 1 Gew.-% und höchstens 7 Gew.-%, bezogen auf das Gesamtgewicht des nachbefeuchteten Superabsorbers.

2. Verfahren nach Anspruch 1, bei dem das Grundpolymer gleichzeitig mit einem organischen Vernetzer und einer Lösung eines mehrwertigen Metallsalzes in Gegenwart eines Alkohols in Berührung gebracht wird, indem das Grundpolymer mit einer Mischung, die organischen Vernetzer, mehrwertiges Metallsalz und Alkohol umfasst, in Berührung gebracht wird.

3. Verfahren nach Anspruch 1, bei dem das Grundpolymer zuerst mit einer Mischung, die einen organischen Vernetzer und einen Alkohol umfasst, und dann mit einer Lösung eines mehrwertigen Metallsalzes in Berührung gebracht wird.

4. Verfahren nach einem der Ansprüche 1 bis 3, bei dem das mehrwertige Metallsalz ein mehrwertiges Metallkation aus der Gruppe bestehend aus Al³⁺, Ti⁴⁺ und Zr⁴⁺ umfasst.

5. Verfahren nach einem der Ansprüche 1 bis 4, bei dem es sich bei dem mehrwertigen Metallkation um Al³⁺ handelt.

6. Verfahren nach einem der Ansprüche 1 bis 5, bei dem der nachbefeuchtete, oberflächenvernetzte Superabsorber bis zu einem Feuchtigkeitsgehalt von 3 bis 5 Gew.-%, bezogen auf das Gesamtgewicht des Superabsorbers, nachbefeuchtet wird.

7. Nachbefeuchteter, oberflächenvernetzter Superabsorber, erhältlich nach dem Verfahren gemäß einem der vorhergehenden Ansprüche.

8. Hygieneartikel, umfassend den Superabsorber nach Anspruch 7.

## Revendications

1. Procédé pour la production d'un superabsorbant réticulé en surface réhumidifié qui comprend les étapes consistant à mettre en contact un polymère de base superabsorbant avec un agent de réticulation organique et une solution de sel de métal multivalent en présence d'un alcool choisi dans le groupe constitué par le propylèneglycol, le propane-1,3-diol, le propan-1-ol, le propan-2-ol et les mélanges de ceux-ci, traiter thermiquement pour produire un superabsorbant sec réticulé en surface et réhumidifier le superabsorbant sec réticulé en surface par ajout d'eau pure pour atteindre une teneur en humidité du superabsorbant réhumidifié d'au moins 1 % en poids et de pas plus de 7 % en poids, sur la base du poids total de superabsorbant réhumidifié.

2. Procédé selon la revendication 1, dans lequel le polymère de base est simultanément mis en contact avec un agent de réticulation organique et une solution de sel de métal multivalent en présence d'un alcool par la mise en contact du polymère de base avec un mélange comprenant l'agent de réticulation organique, le sel de métal multivalent et l'alcool.

3. Procédé selon la revendication 1, dans lequel le polymère de base est mis en contact d'abord avec un mélange comprenant un agent de réticulation organique et un alcool et ensuite avec une solution de sel de métal multivalent.

4. Procédé selon l'une quelconque des revendications 1 à 3, dans lequel le sel de métal multivalent comprend un cation métallique multivalent choisi dans le groupe constitué par Al³⁺, Ti⁴⁺ et Zr⁴⁺.

5. Procédé selon l'une quelconque des revendications 1 à 4, dans lequel le cation métallique multivalent est Al³⁺.

6. Procédé selon l'une quelconque des revendications 1 à 5, dans lequel le superabsorbant réticulé en surface réhumidifié est réhumidifié à une teneur en humidité de 3 à 5 % en poids sur la base du poids total de superabsorbant.

7. Superabsorbant réticulé en surface réhumidifié pouvant être obtenu par le procédé selon l'une quelconque des revendications précédentes.

8. Article d'hygiène comprenant le superabsorbant selon la revendication 7.
